# EUROPEAN PATENT APPLICATION

(11) **EP 4 640 795 A1**
(43) Date of publication of application: **29.10.2025**
(21) Application number: 24770649.2
(22) Date of filing: 05.03.2024
(51) Int. Cl.: C10M 105/38, C09K 5/04, C10M 105/42, C10N 30/00, C10N 40/30

(54) **ESTER FOR REFRIGERATOR OIL, BASE OIL FOR REFRIGERATOR OIL, REFRIGERATOR OIL, AND WORKING FLUID COMPOSITION**

(30) Priority: 10.03.2023 JP 2023037278
(71) Applicant: ENEOS Corporation, Chiyoda-ku Tokyo 100-8162 (JP); NOF Corporation, Shibuya-ku Tokyo 150-6019 (JP)
(72) Inventor: KAWAGUCHI, Masaki, Tokyo 100-8162 (JP); ANDO, Makoto, Tokyo 100-8162 (JP); MIZUTANI, Yuya, Tokyo 100-8162 (JP); OKAZAKI, Motoya, Tokyo 100-8162 (JP); OGATA, Hidetoshi, Tokyo 100-8162 (JP); SEKI, Yuma, Tokyo 100-8162 (JP); OMORI, Kazuki, Amagasaki-shi, Hyogo 660-0095 (JP); ODA, Kazuhiro, Amagasaki-shi, Hyogo 660-0095 (JP)
(74) Representative: Grünecker Patent- und Rechtsanwälte PartG mbB
(86) International application number: PCT/JP2024/008301
(87) International publication number: WO 2024/190539

(57) **Abstract**

An ester for refrigerating machine oil comprising: a first ester that is an ester of a polyhydric alcohol and a fatty acid having 6 to 9 carbon atoms; a second ester that is an ester of pentaerythritol and a fatty acid; and a third ester that is an ester of pentaerythritol, a dicarboxylic acid, and a fatty acid, wherein both the fatty acid constituting the second ester and the fatty acid constituting the third ester are mixed fatty acids comprising at least one selected from the group consisting of branched butanoic acid, branched pentanoic acid, and linear pentanoic acid, and either branched octanoic acid or branched nonanoic acid.

## Description

### Technical Field

The present invention relates to an ester for refrigerating machine oil, a base oil for refrigerating machine oil, a refrigerating machine oil, and a working fluid composition.

### Background Art

Refrigerating machines such as refrigerators, car air conditioners, room air conditioners, and vending machines are equipped with compressors for circulating a refrigerant within a refrigeration cycle. The compressor is filled with a refrigerating machine oil for lubricating sliding members.

The refrigerating machine oil comprises a base oil and additives. The base oil in the refrigerating machine oil is appropriately selected according to properties such as compatibility with the refrigerant. For example, Patent Document 1 discloses a tetraester of pentaerythritol used in refrigerating machine oils and the like, which exhibits excellent compatibility with difluoromethane refrigerant.

### Citation List

### Patent Literature

[Patent Literature 1] WO 2012/026212

### Summary of Invention

### Technical Problem

When a refrigerant dissolves in a refrigerating machine oil, the kinematic viscosity of the refrigerating machine oil (refrigerant dissolution viscosity) decreases, which may cause problems such as poor lubrication of sliding members, seizure, and increase of wear. In response, it is conceivable to increase the kinematic viscosity of the refrigerating machine oil itself (the kinematic viscosity of the refrigerating machine oil in a state where no refrigerant is dissolved). However, if the kinematic viscosity of the refrigerating machine oil itself is too high, the refrigerating machine oil may tend to remain in the evaporator or evaporator tube within the refrigeration cycle, or the startability of the refrigerating machine may decrease, thereby potentially deteriorating the efficiency of the refrigerating machine. Therefore, it is required to increase the refrigerant dissolution viscosity of the refrigerating machine oil without excessively increasing the kinematic viscosity of the refrigerating machine oil itself.

Accordingly, one aspect of the present invention aims to provide an ester for refrigerating machine oil, a base oil for refrigerating machine oil, and a refrigerating machine oil, which can increase the refrigerant dissolution viscosity when difluoromethane is dissolved in the refrigerating machine oil, without excessively increasing the kinematic viscosity of the refrigerating machine oil itself.

### Solution to Problem

According to studies conducted by the inventors of the present invention, it has been found that a mixed ester comprising two types of polyol esters and a complex ester is suitable as an ester for refrigerating machine oil that can increase the refrigerant dissolution viscosity when difluoromethane is dissolved in the refrigerating machine oil, without excessively increasing the kinematic viscosity of the refrigerating machine oil itself.

The present invention includes the following aspects:
[1] An ester for refrigerating machine oil comprising:
   a first ester that is an ester of a polyhydric alcohol and a fatty acid having 6 to 9 carbon atoms;
   a second ester that is an ester of pentaerythritol and a fatty acid; and
   a third ester that is an ester of pentaerythritol, a dicarboxylic acid, and a fatty acid,
   wherein both the fatty acid constituting the second ester and the fatty acid constituting the third ester are mixed fatty acids comprising at least one selected from the group consisting of branched butanoic acid, branched pentanoic acid, and linear pentanoic acid, and either branched octanoic acid or branched nonanoic acid.
[2] The ester for refrigerating machine oil according to [1], wherein the content of the first ester is from 30 to 90% by mass, the content of the second ester is from 5 to 50% by mass, and the content of the third ester is from 2 to 40% by mass, based on the total amount of the ester for refrigerating machine oil.
[3] A base oil for a refrigerating machine oil comprising:
   a first ester that is an ester of a polyhydric alcohol and a fatty acid having 6 to 9 carbon atoms;
   a second ester that is an ester of pentaerythritol and a fatty acid; and
   a third ester that is an ester of pentaerythritol, a dicarboxylic acid, and a fatty acid,
   wherein both the fatty acid constituting the second ester and the fatty acid constituting the third ester are mixed fatty acids comprising at least one selected from the group consisting of branched butanoic acid, branched pentanoic acid, and linear pentanoic acid, and either branched octanoic acid or branched nonanoic acid.
[4] The base oil for refrigerating machine oil according to [3], wherein the content of the first ester is from 30 to 90% by mass, the content of the second ester is from 5 to 50% by mass, and the content of the third ester is from 2 to 40% by mass, based on the total amount of the base oil for the refrigerating machine oil.
[5] A refrigerating machine oil, comprising the base oil for refrigerating machine oil according to [3] or [4].
[6] The refrigerating machine oil according to [5], being used with a refrigerant comprising difluoromethane.
[7] A working fluid composition comprising:
   the refrigerating machine oil according to [5] or [6], and
   a refrigerant.
[8] The working fluid composition according to [7], wherein the refrigerant comprises difluoromethane.

### Advantageous Effects of Invention

According to one aspect of the present invention, it is possible to provide an ester for refrigerating machine oil, a base oil for refrigerating machine oil, and a refrigerating machine oil, which can increase the refrigerant dissolution viscosity when difluoromethane is dissolved in the refrigerating machine oil, without excessively increasing the kinematic viscosity of the refrigerating machine oil itself. According to another aspect of the present invention, it is possible to provide an ester for refrigerating machine oil, a base oil for refrigerating machine oil, and a refrigerating machine oil, which exhibit excellent compatibility with difluoromethane.

### Description of Embodiments

One embodiment of the present invention is an ester for refrigerating machine oil comprising a first ester that is an ester of a polyhydric alcohol and a fatty acid having 6 to 9 carbon atoms, a second ester that is an ester of pentaerythritol and a fatty acid, and a third ester that is an ester of pentaerythritol, a dicarboxylic acid, and a fatty acid.

The first ester is represented by the following formula (1): 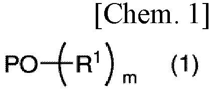 wherein PO represents a residue obtained by removing a hydrogen atom from each of the m -OH groups of the polyhydric alcohol, R¹ represents a residue obtained by removing a -OH group from the - COOH group of a fatty acid having 6 to 9 carbon atoms, and m represents an integer of 2 or more. The plurality of R¹ groups may be the same as or different from each other.

The polyhydric alcohol constituting the first ester may, for example, be a polyhydric alcohol having 2 to 6 hydroxyl groups. That is, m in formula (1) may be an integer from 2 to 6. The number of carbon atoms of the polyhydric alcohol may, for example, be 4 or more or 5 or more, and may be 12 or less or 10 or less.

The polyhydric alcohol may, for example, be a hindered alcohol such as neopentyl glycol, trimethylolethane, trimethylolpropane, trimethylolbutane, di-(trimethylolpropane), tri-(trimethylolpropane), pentaerythritol, or dipentaerythritol. Among these, neopentyl glycol or pentaerythritol is preferable due to their particularly excellent compatibility with difluoromethane, and pentaerythritol is more preferable.

The ester for refrigerating machine oil may comprise one kind of the first ester, two kinds of the first ester, or three or more kinds of the first ester. When the ester for refrigerating machine oil comprises one kind of the first ester, the polyhydric alcohol constituting the first ester is preferably pentaerythritol. When the ester for refrigerating machine oil comprises two kinds of the first ester, it is preferable that the polyhydric alcohol constituting one of the first esters is neopentyl glycol and the polyhydric alcohol constituting the other first ester is pentaerythritol.

The fatty acid having 6 to 9 carbon atoms constituting the first ester may be a saturated fatty acid. The number of carbon atoms in the fatty acid may be 7 to 9 or 8 to 9. Examples of such fatty acids include hexanoic acid, heptanoic acid, octanoic acid, and nonanoic acid. These fatty acids may be linear or branched, and are preferably branched, more preferably fatty acids having a branch at the α - and/or *β* -position. The fatty acid is preferably at least one selected from the group consisting of 2-methylpentanoic acid, 2-methylhexanoic acid, 2-ethylpentanoic acid, 2-methylheptanoic acid, 2-ethylhexanoic acid, and 3,5,5-trimethylhexanoic acid, and more preferably at least one selected from the group consisting of 2-ethylhexanoic acid and 3,5,5-trimethylhexanoic acid.

The second ester is an ester of pentaerythritol and a fatty acid, wherein the fatty acid is a mixed fatty acid comprising at least one selected from the group consisting of branched butanoic acid, branched pentanoic acid, and linear pentanoic acid, and either branched octanoic acid or branched nonanoic acid. The second ester is represented by the following formula (2): 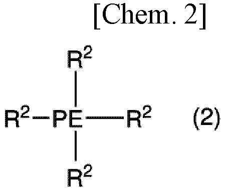 wherein PE represents a residue obtained by removing a hydrogen atom from each of the four -OH groups of pentaerythritol, and R² represents a residue obtained by removing a -OH group from the - COOH group of branched butanoic acid (also referred to as iC4 acid residue), branched pentanoic acid (also referred to as iC5 acid residue), linear pentanoic acid (also referred to as nC5 acid residue), branched octanoic acid (also referred to as iC8 acid residue), or branched nonanoic acid (also referred to as iC9 acid residue), provided that at least one of the R² groups is an iC4 acid residue, iC5 acid residue, or nC5 acid residue, and at least one of the R² groups is an iC8 acid residue or iC9 acid residue.

The branched butanoic acid constituting the second ester is preferably 2-methylpropanoic acid. The branched pentanoic acid constituting the second ester is preferably 2-methylbutanoic acid. The branched octanoic acid constituting the second ester is preferably 2-ethylhexanoic acid. The branched nonanoic acid constituting the second ester is preferably 3,5,5-trimethylhexanoic acid.

It is preferable that at least one of the R² groups is an iC4 acid residue and at least one of the R² groups is an iC8 acid residue. It is more preferable that all of the R² groups are iC4 acid residues or iC8 acid residues (provided that at least one is an iC4 acid residue and at least one is an iC8 acid residue). In this case, the molar ratio of iC4 acid residue/iC8 acid residue may be 50/50 or more, 60/40 or more, 70/30 or more, or 75/25 or more, and may be 95/5 or less, 90/10 or less, or 85/15 or less.

The third ester is an ester (complex ester) of pentaerythritol, a dicarboxylic acid, and a fatty acid, wherein the fatty acid is a mixed fatty acid comprising at least one selected from the group consisting of branched butanoic acid, branched pentanoic acid, and linear pentanoic acid, and either branched octanoic acid or branched nonanoic acid. The third ester is represented by the following formula (3): 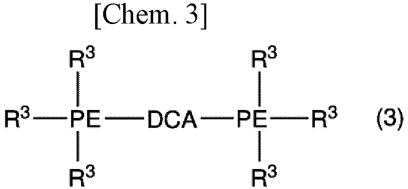 wherein PE represents a residue obtained by removing a hydrogen atom from each of the four -OH groups of pentaerythritol, DCA represents a residue obtained by removing a -OH group from each of the two -COOH groups of a dicarboxylic acid, and R³ represents a residue obtained by removing a -OH group from the -COOH group of branched butanoic acid (iC4 acid residue), branched pentanoic acid (also referred to as iC5 acid residue), linear pentanoic acid (also referred to as nC5 acid residue), branched octanoic acid (iC8 acid residue), or branched nonanoic acid (iC9 acid residue), provided that at least one of the R³ groups is an iC4 acid residue, iC5 acid residue, or nC5 acid residue, and at least one of the R3 groups is an iC8 acid residue or iC9 acid residue.

It is preferable that at least one of the R³ groups is an iC4 acid residue and at least one of the R³ groups is an iC8 acid residue or iC9 acid residue. It is more preferable that all of the R³ groups are iC4 acid residues, iC8 acid residues, or iC9 acid residues (provided that at least one is an iC4 acid residue and at least one is an iC8 acid residue or iC9 acid residue), and it is even more preferable that all of the R³ groups are iC4 acid residues or iC8 acid residues (provided that at least one is an iC4 acid residue and at least one is an iC8 acid residue). In this case, the molar ratio of iC4 acid residue/iC8 acid residue or iC4 acid residue/iC9 acid residue may be 50/50 or more, 60/40 or more, 70/30 or more, 75/25 or more, 84/16 or more, or 86/14 or more, and may be 95/5 or less, 90/10 or less, or 85/15 or less.

The dicarboxylic acid constituting the third ester may be an aliphatic dicarboxylic acid. The dicarboxylic acid may be linear or branched. The number of carbon atoms in the dicarboxylic acid may be 4 or more or 6 or more, and may be 12 or less or 10 or less. Examples of the dicarboxylic acid include adipic acid, pimelic acid, suberic acid, azelaic acid, sebacic acid, and phthalic acid. The dicarboxylic acid is preferably adipic acid.

The branched butanoic acid constituting the third ester is preferably 2-methylpropanoic acid. The branched octanoic acid constituting the third ester is preferably 2-ethylhexanoic acid. The branched nonanoic acid constituting the third ester is preferably 3,5,5-trimethylhexanoic acid.

In one embodiment, the fatty acid having 6 to 9 carbon atoms constituting the first ester may be a mixture of two or more fatty acids. For example, it may be a mixture of a fatty acid having 5 to 8 carbon atoms and a fatty acid having 9 carbon atoms, and preferably a mixture of a fatty acid having 8 carbon atoms and a fatty acid having 9 carbon atoms. The molar ratio of the content of the fatty acid having 5 to 8 carbon atoms (preferably a fatty acid having 8 carbon atoms) to the content of the fatty acid having 9 carbon atoms (content of fatty acid having 5 to 8 carbon atoms (preferably a fatty acid having 8 carbon atoms)/content of fatty acid having 9 carbon atoms) may be 10/90 or more, 40/60 or more, 55/45 or more, 60/40 or more, or 75/25 or more, and may be 95/5 or less, 90/10 or less, 85/15 or less, or 80/20 or less.

In one embodiment, the molar ratio (iC4 acid/iC8 acid ratio) of branched butanoic acid (preferably 2-methylpropanoic acid) to branched octanoic acid (preferably 2-ethylhexanoic acid) in the fatty acid having 6 to 9 carbon atoms constituting the first ester and the fatty acid constituting the second ester may be 5/95 or more, 10/90 or more, or 20/80 or more, and may be 95/5 or less, 60/40 or less, 50/50 or less, 40/60 or less, or 35/65 or less.

In the mixture of the first ester and the second ester, the molar ratio (iC4 acid/iC8 acid ratio) of branched butanoic acid (preferably 2-methylpropanoic acid) to branched octanoic acid (preferably 2-ethylhexanoic acid) in the fatty acid constituting the pentaerythritol tetraester may be 5/95 or more, 10/90 or more, or 20/80 or more, and may be 95/5 or less, 60/40 or less, 50/50 or less, 40/60 or less, 35/65 or less, or 34/66 or less.

In one embodiment, the molar ratio of branched butanoic acid (preferably 2-methylpropanoic acid) to branched nonanoic acid (preferably 3,5,5-trimethylhexanoic acid) (iC4 acid/iC9 acid ratio) in the fatty acid having 6 to 9 carbon atoms constituting the first ester and in the fatty acid constituting the second ester may be 20/80 or more, 50/50 or more, 80/20 or more, or 90/10 or more, and may be 100/0 or less, 99/1 or less, or 95/5 or less.

In the mixture of the first ester and the second ester, the molar ratio of branched butanoic acid (preferably 2-methylpropanoic acid) to branched nonanoic acid (preferably 3,5,5-trimethylhexanoic acid) in the fatty acid constituting the pentaerythritol tetraester (iC4 acid/iC9 acid ratio in the fatty acid constituting the pentaerythritol tetraester) may be 20/80 or more, 50/50 or more, 80/20 or more, 86/14 or more, or 90/10 or more, and may be 100/0 or less, 99/1 or less, or 95/5 or less.

In one embodiment, the kinematic viscosity at 40°C of the first ester may be lower than the kinematic viscosity at 40°C of the second ester. In addition, the lower temperature refrigerant miscibility region of the first ester may be narrower than that of the second ester. For example, with respect to the maximum value of the lower temperature two layer separation temperature when mixed with difluoromethane, the first ester may have a higher value than the second ester. By selecting such a first ester, it tends to be easier to maintain a balance between the refrigerant dissolution viscosity and the two layer separation temperature without significantly increasing the viscosity of the refrigerating machine oil.

The iC4 acid/iC8 acid ratio and iC4 acid/iC9 acid ratio are measured by the method described in the Examples. In addition, the molar ratio of iC4 acid residue/iC8 acid residue and the molar ratio of iC4 acid residue/iC9 acid residue in the above-mentioned third ester (complex ester (octaester) represented by formula (3)) can also be measured in the same manner using the calibration curve described in the Examples.

The content of the first ester may be 10% by mass or more, 20% by mass or more, 30% by mass or more, 40% by mass or more, or 50% by mass or more, and may be 93% by mass or less, 90% by mass or less, 80% by mass or less, or 70% by mass or less, based on the total amount of the ester for refrigerating machine oil. The content of the second ester may be 5% by mass or more, 10% by mass or more, or 20% by mass or more, and may be 68% by mass or less, 50% by mass or less, 40% by mass or less, or 30% by mass or less, based on the total amount of the ester for refrigerating machine oil. The content of the third ester may be 2% by mass or more, 5% by mass or more, or 10% by mass or more, and may be 65% by mass or less, 40% by mass or less, 30% by mass or less, or 20% by mass or less, based on the total amount of the ester for refrigerating machine oil. Furthermore, the total content of the second ester and the third ester may be 7% by mass or more, 10% by mass or more, 20% by mass or more, or 30% by mass or more, and may be 90% by mass or less, 80% by mass or less, 70% by mass or less, 60% by mass or less, or 50% by mass or less, based on the total amount of the ester for refrigerating machine oil.

The kinematic viscosity at 40°C of the first ester may be, for example, 5 mm ²/s or more and 100 mm ²/s or less, 20 mm ²/s or more, 30 mm ²/s or more, or 40 mm ²/s or more, and 80 mm ²/s or less, 60 mm²/s or less, or 50 mm ²/s or less. The kinematic viscosity at 100°C of the first ester may be 1 mm ²/s or more, 3 mm ²/s or more, or 5 mm ²/s or more, and 20 mm ²/s or less, 10 mm ²/s or less, or 8 mm ²/s or less. The viscosity index of the first ester may be 50 or more, 60 or more, or 70 or more, and 120 or less, 110 or less, or 100 or less. The kinematic viscosity and viscosity index in this specification mean the kinematic viscosity and viscosity index measured in accordance with JIS K2283:2000.

The acid value of the first ester may be 0.1 mgKOH/g or less or 0.05 mgKOH/g or less. The hydroxyl value of the first ester may be 15 mgKOH/g or less, 10 mgKOH/g or less, or 5 mgKOH/g or less. The pour point of the first ester may be -20°C or lower or -40°C or lower. The acid value in this specification means the acid value measured in accordance with JIS K2501:2003. The hydroxyl value in this specification means the hydroxyl value measured in accordance with JIS K0070:1992. The pour point in this specification means the pour point measured in accordance with JIS K2269:1987.

The kinematic viscosity at 40°C of the ester for refrigerating machine oil may be 20 mm ²/s or more, 30 mm ²/s or more, or 40 mm²/s or more, and 200 mm ²/s or less, 100 mm ²/s or less, or 80 mm ²/s or less. The kinematic viscosity at 100°C of the ester for refrigerating machine oil may be 1 mm ²/s or more, 3 mm ²/s or more, or 5 mm ²/s or more, and 30 mm ²/s or less, 20 mm ²/s or less, or 10 mm ²/s or less. The viscosity index of the ester for refrigerating machine oil may be 50 or more, 60 or more, or 70 or more, and 120 or less, 110 or less, or 100 or less.

The ester for refrigerating machine oil described above is suitably used as a base oil for refrigerating machine oil. Therefore, the "ester for refrigerating machine oil" in the above description can be read as "base oil for refrigerating machine oil." That is, another embodiment of the present invention is a base oil for refrigerating machine oil comprising the above first ester, second ester, and third ester.

Another embodiment of the present invention is a refrigerating machine oil comprising the above base oil for refrigerating machine oil (ester for refrigerating machine oil). The content of the base oil for refrigerating machine oil (ester for refrigerating machine oil) may be 50% by mass or more, 60% by mass or more, 70% by mass or more, 80% by mass or more, or 90% by mass or more, based on the total amount of the refrigerating machine oil.

The refrigerating machine oil may further comprise other base oils. Examples of other base oils include mineral oils and synthetic oils. The mineral oil may be a paraffinic mineral oil, a naphthenic mineral oil, or the like. Examples of the synthetic oil include synthetic hydrocarbon oils such as poly- α -olefin and alkylbenzene, and oxygen-containing oils such as esters other than the above ester for refrigerating machine oil, polyvinyl ether, and polyalkylene glycol.

The refrigerating machine oil may further comprise additives. Examples of the additives include acid scavengers, oxygen scavengers, antioxidants, extreme pressure agents, oiliness agents, defoaming agents, metal deactivators, antiwear agents, viscosity index improvers, pour point depressants, and detergent/dispersants. The content of the additives may be 0.1% by mass or more or 1% by mass or more, and 10% by mass or less or 5% by mass or less, based on the total amount of the refrigerating machine oil.

The kinematic viscosity at 40°C of the refrigerating machine oil may be 20 mm ²/s or more, 30 mm ²/s or more, or 40 mm ²/s or more, and 200 mm ²/s or less, 100 mm ²/s or less, or 80 mm ²/s or less. The kinematic viscosity at 100°C of the refrigerating machine oil may be 1 mm ²/s or more, 3 mm ²/s or more, or 5 mm ²/s or more, and 30 mm ²/s or less, 20 mm ²/s or less, or 10 mm ²/s or less. The viscosity index of the refrigerating machine oil may be 50 or more, 60 or more, or 70 or more, and 120 or less, 110 or less, or 100 or less.

The refrigerating machine oil may exist as a working fluid composition for a refrigerating machine, in which it is mixed with a refrigerant. That is, in one embodiment, the refrigerating machine oil is used together with a refrigerant. In addition, another embodiment of the present invention is a working fluid composition comprising the above refrigerating machine oil and a refrigerant.

The refrigerating machine oil of the present embodiment, by comprising the above base oil for refrigerating machine oil (ester for refrigerating machine oil), exhibits excellent compatibility with difluoromethane and refrigerant dissolution viscosity characteristics. Therefore, the refrigerant is preferably a refrigerant comprising difluoromethane (R32). The content of difluoromethane may be 50% by mass or more, 60% by mass or more, 70% by mass or more, 80% by mass or more, or 90% by mass or more, based on the total amount of the refrigerant.

The refrigerant may consist of difluoromethane, or may further comprise other refrigerants in addition to difluoromethane. Examples of other refrigerants include saturated fluorocarbons other than difluoromethane (also referred to as HFCs), unsaturated fluorocarbons (also referred to as HFOs), hydrocarbons, fluorinated ethers, bis(trifluoromethyl) sulfide, trifluoroiodomethane, ammonia (R717), and carbon dioxide (R744).

The content of the refrigerating machine oil in the working fluid composition may be 1 part by mass or more or 2 parts by mass or more, and 500 parts by mass or less or 400 parts by mass or less, per 100 parts by mass of the refrigerant.

### Examples

Hereinafter, the present invention will be described in more detail based on Examples, but the present invention is not limited to the following Examples.

Using the following first ester, second ester, and third ester, esters for refrigerating machine oil (base oils for refrigerating machine oil) having the compositions shown in Table 1 were prepared.

### (First Ester)

1A: Diester of neopentyl glycol and 2-ethylhexanoic acid (kinematic viscosity at 40°C: 7.4 mm ²/s, kinematic viscosity at 100°C: 2.0 mm²/s, viscosity index: 52, acid value: less than 0.01 mgKOH/g, hydroxyl value: less than 2 mgKOH/g, pour point: less than -45°C)
1B: Tetraester of pentaerythritol and 2-ethylhexanoic acid/3,5,5-trimethylhexanoic acid (molar ratio: 70/30) (kinematic viscosity at 40°C: 56.5 mm ²/s, kinematic viscosity at 100°C: 7.43 mm ²/s, viscosity index: 90, acid value: less than 0.01 mgKOH/g, hydroxyl value: less than 2 mgKOH/g, pour point: less than -45°C)
1C: Tetraester of pentaerythritol and 2-ethylhexanoic acid/3,5,5-trimethylhexanoic acid (molar ratio: 85/15) (kinematic viscosity at 40°C: 48.5 mm ²/s, kinematic viscosity at 100°C: 6.67 mm ²/s, viscosity index: 86, acid value: less than 0.01 mgKOH/g, pour point: less than -45°C)

### (Second Ester)

2A: Tetraester of pentaerythritol and 2-methylpropanoic acid/2-ethylhexanoic acid (molar ratio: 76/24)
2B: Tetraester of pentaerythritol and 2-methylpropanoic acid/2-ethylhexanoic acid (molar ratio: 87/13)
2C: Tetraester of pentaerythritol and 2-methylpropanoic acid/2-ethylhexanoic acid (molar ratio: 82/18)
2D: Tetraester of pentaerythritol and 2-methylpropanoic acid/2-ethylhexanoic acid (molar ratio: 88/12)

### (Third Ester)

3A: Complex ester (octaester) represented by the following formula (3a) (molar ratio of iC4 acid residue/iC8 acid residue in the group represented by R^{3a}: 76/24)

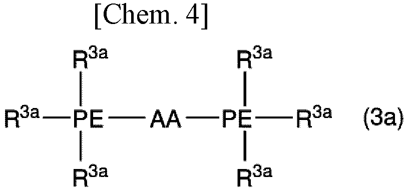

PE represents a residue obtained by removing a hydrogen atom from each of the four -OH groups of pentaerythritol, AA represents a residue obtained by removing a -OH group from each of the two - COOH groups of adipic acid, and R^{3a} represents a residue obtained by removing a -OH group from the -COOH group of 2-methylpropanoic acid (iC4 acid residue) or a residue obtained by removing a -OH group from the -COOH group of 2-ethylhexanoic acid (iC8 acid residue).

3B: Complex ester represented by the above formula (3a) (molar ratio of iC4 acid residue/iC8 acid residue in the group represented by R^{3a}: 87/13)
3C: Complex ester represented by the above formula (3a) (molar ratio of iC4 acid residue/iC8 acid residue in the group represented by R^{3a}: 82/18) 3D: Complex ester represented by the above formula (3a) (molar ratio of iC4 acid residue/iC8 acid residue in the group represented by R^{3a}: 88/12)

### (Measurement of iC4 acid/iC8 acid ratio and iC4 acid/iC9 acid ratio in the fatty acid constituting the pentaerythritol tetraester)

Using gas chromatography with a general non-polar column, the iC4 acid/iC8 acid ratio and iC4 acid/iC9 acid ratio (molar ratio) in the fatty acid constituting the pentaerythritol tetraester in the above first, second, and third esters and their mixed ester samples were measured. For the measurement, pentaerythritol iC4 acid tetraester, pentaerythritol iC8 acid tetraester, and pentaerythritol iC9 acid tetraester were used as standard samples, and necessary parameters such as the area, mass, and relative sensitivity on a molar basis of each fatty acid obtained from the calibration curve, and correction factors were used. The results are shown in Table 1 as "iC4 acid/iC8 acid ratio" and "iC4 acid/iC9 acid ratio," respectively.

### (Measurement of kinematic viscosity and viscosity index)

The kinematic viscosity at 40°C, kinematic viscosity at 80°C, kinematic viscosity at 100 °C, and viscosity index of each ester for refrigerating machine oil (base oil for refrigerating machine oil) were measured in accordance with JIS K2283:2000. The results are shown in Table 1.

### (Measurement of Refrigerant Dissolution Viscosity, Ratio of Refrigerant Dissolution Viscosity to Kinematic Viscosity, and Viscosity Retention Rate)

100 g of each ester for refrigerating machine oil (base oil for refrigerating machine oil) was placed in a 400 mL pressure-resistant vessel equipped with a vibrational viscometer. After degassing the vessel under vacuum, R32 was introduced as a refrigerant to prepare a working fluid composition. The pressure of the refrigerant and the temperature of the pressure-resistant vessel were adjusted so that the conditions reached a temperature of 80°C and an absolute pressure of 3.4 MPa. Under these conditions, the absolute viscosity and volume of the working fluid composition were measured, and the refrigerant dissolution viscosity (mm ²/s) was calculated based on parameters such as the refrigerant gas density, the amounts of the filled oil and refrigerant, and the mass of the working fluid. The results are shown in Table 1.

Note that, when the first ester 1C was used alone as the base oil, the refrigerant dissolution viscosity was also evaluated in the same manner and found to be 2.7 mm²/s.

In addition, the ratio of the refrigerant dissolution viscosity (mm² /s) to the kinematic viscosity (mm ²/s) at 40°C for each ester for refrigerating machine oil (base oil for refrigerating machine oil) (i.e., refrigerant dissolution viscosity/kinematic viscosity at 40°C), and the ratio of the refrigerant dissolution viscosity (mm ²/s) to the kinematic viscosity (mm ² /s) at 100 °C (i.e., refrigerant dissolution viscosity/kinematic viscosity at 100°C) were calculated. The results are shown in Table 1. The larger these ratios, the more the ester for refrigerating machine oil (base oil for refrigerating machine oil) can increase the refrigerant dissolution viscosity without excessively increasing the kinematic viscosity of the refrigerating machine oil itself.

Furthermore, the viscosity retention rate at 80°C before and after refrigerant dissolution for each ester for refrigerating machine oil (base oil for refrigerating machine oil) was calculated as follows: Viscosity retention rate = (refrigerant dissolution viscosity (mm2 /s) at 80°C and 3.4 MPa after refrigerant dissolution (working fluid)/ kinematic viscosity (mm 2/s) at 80°C and 1 atm of each ester for refrigerating machine oil) × 100.

The results are shown in Table 1. The higher the viscosity retention rate, the more easily the kinematic viscosity can be maintained at a high level even during refrigerant dissolution.

### (Evaluation of Refrigerant Compatibility)

In accordance with the "Test Method for Compatibility with Refrigerants" described in JIS K2211:2009 "Refrigerating Machine Oil," a mixture of the refrigerant (R32) and each ester for refrigerating machine oil (base oil for refrigerating machine oil) (with the oil rate, i.e., the proportion of the ester for refrigerating machine oil (base oil for refrigerating machine oil) in the mixture, being 5 to 40% by mass) was gradually cooled from 20°C to -60°C, and the temperature at which the mixture separated into layers or became cloudy was evaluated as the two layer separation temperature (°C). The maximum value of the two layer separation temperature within this oil rate range is shown in Table 1. The oil rate at which the two layer separation temperature reached its maximum value is indicated in parentheses in "Maximum Value of Two layer Separation Temperature (°C)" in Table 1.

Note that, when each of the first ester 1B and the first ester 1C was used alone as the base oil, the refrigerant compatibility was also evaluated in the same manner, and in both cases, separation into two layers occurred at 20°C or lower.

**[Table 1]**

| | | | Ex. 1 | Comp. Ex. 1 | Ex. 2 | Comp. Ex. 2 | Ex. 3 | Comp. Ex. 3 | Ex. 4 | Comp. Ex. 4 |
|---|---|---|---|---|---|---|---|---|---|---|
| | First Ester | 1A | 5 | - | - | - | - | - | - | - |
| | | 1B | 52 | - | 65 | - | - | - | - | - |
| | | 1C | - | - | - | - | 60 | - | 60 | - |
| | Second Ester | 2A | 28 | 65 | - | - | - | - | - | - |
| Ester (Base Oil) for Refrigerating Machine Oil Composition (% by mass) | | 2B | - | - | 23 | 66 | - | - | - | - |
| | | 2C | - | - | - | - | 25 | 62 | - | - |
| | | 2D | - | - | - | - | - | - | 26 | 66 |
| | Third Ester | 3A | 15 | 35 | - | - | - | - | - | - |
| | | 3B | - | - | 12 | 34 | - | - | - | - |
| | | 3C | - | - | - | - | 15 | 38 | - | - |
| | | 3D | - | - | - | - | - | - | 14 | 34 |
| iC4 acid/iC8 acid ratio in fatty acids constituting pentaerythritol tetraester | | | 33/67 | 76/24 | 34/66 | 87/13 | 28/72 | 82/18 | 29/71 | 88/12 |
| iC4 acid/iC9 acid ratio in fatty acids constituting pentaerythritol tetraester | | | 92/8 | - | 94/6 | - | 99/1 | - | 100/0 | - |
| | Kinematic Viscosity (mm²/s) | 40°C | 69.97 | 150.1 | 70.24 | 119.4 | 66.39 | 119 | 72.38 | 154 |
| | | 100°C | 8.69 | 14.2 | 8.595 | 12.03 | 8.293 | 12.03 | 8.79 | 14.33 |
| | | 80°C | 14.8 | 25.9 | 14.7 | 21.6 | 14.1 | 21.6 | 15.0 | 26.2 |
| Evaluation Results | Refrigerant Dissolution Viscosity (mm²/s) | | 3.0 | 3.6 | 2.8 | 3.0 | 2.8 | 3.2 | 3.1 | 3.5 |
| | Refrigerant Dissolution Viscosity / Kinematic Viscosity | 40°C | 0.043 | 0.024 | 0.040 | 0.025 | 0.042 | 0.027 | 0.043 | 0.023 |
| | | 100°C | 0.345 | 0.254 | 0.326 | 0.249 | 0.338 | 0.266 | 0.353 | 0.244 |
| | Viscosity Retention Rate (%) | | 20.3 | 13.9 | 19.1 | 13.9 | 19.9 | 14.8 | 20.6 | 13.3 |
| | Viscosity Index | | 95 | 91 | 92 | 88 | 92 | 89 | 93 | 90 |
| | Maximum Value of Two layer Separation Temperature (°C) | | 10(15%) | -17(8%) | 11(20%) | -49(5%) | 9(20%) | -39(5%) | 8(20%) | -38(5%) |

## Claims

1. An ester for refrigerating machine oil comprising:
a first ester that is an ester of a polyhydric alcohol and a fatty acid having 6 to 9 carbon atoms;
a second ester that is an ester of pentaerythritol and a fatty acid; and
a third ester that is an ester of pentaerythritol, a dicarboxylic acid, and a fatty acid,
wherein both the fatty acid constituting the second ester and the fatty acid constituting the third ester are mixed fatty acids comprising at least one selected from the group consisting of branched butanoic acid, branched pentanoic acid, and linear pentanoic acid, and either branched octanoic acid or branched nonanoic acid.

2. The ester for refrigerating machine oil according to claim 1, wherein based on the total amount of the ester for refrigerating machine oil, the content of the first ester is from 30 to 90% by mass, the content of the second ester is from 5 to 50% by mass, and the content of the third ester is from 2 to 40% by mass.

3. A base oil for a refrigerating machine oil comprising:
a first ester which is an ester of a polyhydric alcohol and a fatty acid having 6 to 9 carbon atoms;
a second ester which is an ester of pentaerythritol and a fatty acid; and
a third ester which is an ester of pentaerythritol, a dicarboxylic acid, and a fatty acid,
wherein both the fatty acid constituting the second ester and the fatty acid constituting the third ester are mixed fatty acids comprising at least one selected from the group consisting of branched butanoic acid, branched pentanoic acid, and linear pentanoic acid, and either branched octanoic acid or branched nonanoic acid.

4. The base oil for refrigerating machine oil according to claim 3, wherein based on the total amount of the base oil for the refrigerating machine oil, the content of the first ester is from 30 to 90% by mass, the content of the second ester is from 5 to 50% by mass, and the content of the third ester is from 2 to 40% by mass.

5. A refrigerating machine oil, comprising the base oil for refrigerating machine oil according to claim 3 or 4.

6. The refrigerating machine oil according to claim 5, being used with a refrigerant comprising difluoromethane.

7. A working fluid composition comprising:
the refrigerating machine oil according to claim 5; and
a refrigerant.

8. The working fluid composition according to claim 7, wherein the refrigerant comprises difluoromethane.
